# EUROPEAN PATENT SPECIFICATION

(11) **EP 2 240 010 B1**
(45) Date of publication and mention of the grant of the patent: **01.02.2012**
(21) Application number: 08870136.2
(22) Date of filing: 29.12.2008
(51) Int. Cl.: A01K 1/02

(54) **DEVICE FOR CONTROL OF MOVEMENTS OF FREE-RANGE NURSING SOWS**
VORRICHTUNG ZUR BEWEGUNGSKONTROLLE VON SÄUGENDEN FREILANDSÄUEN
DISPOSITIF DE RÉGULATION DES MOUVEMENTS DE TRUIES ALLAITANTES EN STABULATION LIBRE

(30) Priority: 07.01.2008 DK 200800017; 24.11.2008 DK 200801648
(43) Date of publication of application: 20.10.2010
(73) Proprietor: Abildballe Innovation APS, 8762 Flemming (DK)
(72) Inventor: JENSEN, Søren Juul, 8762 Flemming (DK)
(74) Representative: Gregersen, Niels Henrik
(86) International application number: PCT/DK2008/050337
(87) International publication number: WO 2009/086828

(56) References cited:
- WO-A-03/059047
- AU-A- 6 535 365
- NL-A- 9 301 687
- US-A- 2 722 910

## Description

### Field of the Invention

The present invention concerns a nursing area for sucking pigs comprising a device for controlling movements of a nursing sow, where the nursing area contains at least one elongated nursing bed with a base and having an extension corresponding to the sow in lying position, where the sow may freely leave and enter the nursing bed, where the nursing bed is provided with a first delimited long side, preferably at the sow's back, and a second long side, preferably at the sow's belly, where at the delimited first long side, the nursing bed is provided with a support device which substantially follows the shape of the sow's back in the lying position, preferably a curving support device, and that at the second long side, the nursing bed is provided with at least one means for movement control.

### Background of the Invention

In the pig breeding industry, there has been an increased demand for pork in recent years produced under conditions that allow for the natural behaviour of the animals.

For many years, there has been a focus in sow stocks on the number of weaned piglets and consequently on breeding with the purpose of a greater litter size. At the same time, no particular emphasis has been put on the mother properties of the sows in the breeding process. This means that the sow's behaviour in nursing often entails that the weakest sucking pigs are killed when the sow lies down as the sow throws herself on the nursing bed. In order to relieve this loss of sucking pigs, the stable systems have been designed such that the sow's freedom of movement is strongly impeded. The sow is thereby prevented from performing her natural behaviour, such as rooting behaviour, nest-building behaviour and snout contact with the sucking pigs.

It has appeared that the problem with killing by lying upon sucking pigs was greatest with the sows that were the more passive individuals. Sows that kill the most sucking pigs by lying upon them thus have a greater tendency of lying in lateral position up to the time of farrowing. Such sows thus seem to be less inclined to react when a piglet is squeezed under them. Since the conventional stable types to a greater extent have prevented killing by laying for these sows, breeding with the purpose of reducing this passive behaviour has not been encouraged.

In conventional stable systems that are used the most, the sows stands fixed in a farrowing box from one week before farrowing and until the sucking pigs are weaned after about four weeks. This fixing also means that the sows only can stand still or lie down and is e.g. prevented from turning around and go out.

An example of a conventional farrowing pen can be found in US 6,382,135 B1 where the mobility of the sow is limited to the sow just standing or lying on the right or left side in one and the same nursing bed. Along both sides of the nursing bed and a slightly above this bed, a straight support device (18, 14) is provided. One of the support devices can be adjusted by the staff such that it fits the size of the sow located in the pen.

In stable systems with fixing there are often problems with the legs of the sows due to lack of exercise and thereby lack of muscular strength. Lack of exercise leads to bad health in general and increased risk of circulatory diseases in the sows.

However, there are still problems with sucking pig mortality in the conventional stables. It has been noted that the number of early deaths among sucking pigs rises with the size of the litter. About 7% of the pigs in the litter were stillborn, and 5% of the liveborn pigs die due to being too weak, including too weak to get their part of the first milk from the sow, and 7% of the live born pigs die by squeezing under the sow.

By letting the sow go freely around during farrowing, a more continuous farrowing process is achieved as the sow may move around in order to have the farrowing go on. This means that fewer sucking pigs will be stillborn since it is avoided that the pigs get stuck in the birth canal.

Under free conditions, the sows live together in small groups. One or two days before farrowing, the sow leaves her group in order to search for a suitable place for nesting. The sow prefers a location away from the daily activities of the group and protected against disturbances. The sow collects nesting material which is carried to the expected farrowing location and formed to a nest.

In the nature, the sow plays an active role in connection with the weaning. When the sucking pigs have to use too much energy in drawing milk from the sow, it becomes more profitable for the sucking pigs to look for other food. The sucking pigs' transition to other food will moreover be stimulated by the eating behaviour of the sows and the activity of the other pigs in the pen.

The present knowledge about nursing sows in stable systems indicates that the risk of sucking pigs being killed by the sow lying down is less if the sow leans against a supporting face when lying down than if she lies down in the middle of the pen without any support. Experiments have shown that in 70-90% of situations of laying, the sow prefers to lie down with the back against a supporting means instead of at the middle of the pigpen. If the supporting means is a common pen wall, the sucking pigs will have small chances of getting away when the sow lies down or throws herself against the wall. Thus there have been tests with different types of supporting surfaces with escape possibility and diverse fending guards and shielding.

For example, as supporting means an inclining plate has been used, fitted along the sides of the pen and spaced apart from the floor. When the sow leans against the inclining plate in order to slide down to lying position, the sucking pigs have the possibility of escaping by getting in under the plate. Plates, however, have the disadvantage that they generally reduce the view to the pen such that the staffs have more difficulty in overviewing all pigs in the pen for regular checking up on the state of health of the pigs. The use of straw or other rooting material in the pen causes problems with regard to more work with cleaning under the plates.

A solution with an inclining plate as described above is disclosed in NL-A-9301687 and the document further describes a pen with braces extending from the wall opposite the wall with said inclining plate. The braces are prohibiting the sow in lying in that specific area, but at the same time they diminish the area where the sow is free to move around. Further a pen according to NL-A-9301687 takes up a considerable amount of space and still provides only one place for the sow to lie down.

As fending guard there has e.g. been utilised a pipe along the sides of the pen at a distance above the floor, allowing escape of the sucking pigs. This long, straight pipe, however, only provides that the sow does not lie along the sides equipped with this type of fending guard. Thus it may be recognised that it is not attractive for the sow to place the back against a long straight pipe as fending guard in the pen. Instead, the sow throws herself flatly in the middle of the pen, causing the previously mentioned risk of squeezing more sucking pigs to death.

By nature, the pig is used to use the snout for rooting in the soil and growths in order to find food. The pig's curiosity and desire to root with the snout has thus been a condition for its survival. If there is obviously nothing to root in, the pig will direct its searching behaviour with the snout against pen equipment or pen mates and perform a monotonous or destructive behaviour. According to present law requirements in Denmark, the rooting behaviour of the pigs has to be supported by allocating rooting material to the pens. Cut straw is often used in lesser amounts since it does not obstruct the widely used liquid manure bowl systems which require a low solid content in the liquid manure in order to operate according to intention.

Access to suitable nesting material for the sow may presumably reduce the load by the farrowing and increase the sow's perception of the farrowing pen as a nest.

### Object of the Invention

It is the purpose of the invention to provide a device for movement control of a nursing sow and which enables a loose-housing system as well as stimulation of natural behaviour of farrowing and nursing sows, and which at the same time keeps the mortality of sucking pigs caused by squeezing under the sow at a low level corresponding to conventional farrowing pens.

### Description of the Invention

This purpose is achieved by the present invention as defined in claim 1, which is peculiar in that at the delimited first long side, the nursing bed is provided with a support device which substantially follows the shape of the sow's back in the lying position, preferably a curving support device, and that at the second long side, the nursing bed is provided with at least one means for movement control which by action of the sow may be displaced away from the nursing bed and which is provided with a stop at a position where the means for movement control in the extreme position is disposed immediately outside the second long side of the nursing bed.

When the sow is provided a support device to lean against when she is to lie down on the nursing bed while at the same time being stimulated to lean against the support device by means of the means of movement control and the back-shaped form of the support device, the sucking pigs are provided better opportunity to escape since the speed of the sow's lie-down movement is reduced, while simultaneously it is avoided that the sow lies down at the middle of a pen or in other unsuitable places with a sudden laying movement that will result in killing of sucking pigs by laying.

This entails that the greatest problem of loose-housing sows, namely the killing of sucking pigs by laying, is minimised by means of the invention to a level corresponding to the killing by laying percentage in conventional sow-pens where the sow are fixed in the farrowing pens. The invention thus provides the possibility that all sows used in pig breeding may be untethered during farrowing and nursing without the cost of more sucking pigs being killed by laying.

Practical tests have shown that the sow is highly encouraged to put the back against the support device if it is partly shaped according the sow's back in resting position. The natural behaviour of the sow is to form a nest. This nest is a safe place for nursing the sucking pigs. The shape of the naturally made nest follows the sow's back shape in a natural way, and since the sow by instinct feels secure by this shape, the sow is encouraged to lie with the back against e.g. a curving support device when this acts as limitation at the first long side in the nursing bed.

The support device may also substantially follow the shape of the sow's back in lying position by consisting of at least two parts, e.g. in the form of two straight surfaces or two straight rods, which are joined such that the two parts form an obtuse angle with the nursing bed.

The instinctive behaviour of the sow is hereby utilised to control the sow's movements in the pen whereby the natural behaviour pattern of the sow is stimulated to a higher degree at the same time. This means that the sow's stress level drops, with the health and animal welfare benefits provided by this measure in the pig breeding, including the possibility of improving the general condition of the sows so that this implies a fewer number of stillborn sucking pigs.

As the second long side of the nursing bed is preferably located at the belly of the sow, cf. the preamble of claim 1, there is achieved control of the movement performed by the sow when she is in need of changing nursing position. Since the means for movement control is located immediately at the belly of the sow, the sow will avoid rolling onto the belly, as the sow otherwise will get in contact with the means for movement control. This entails that the sows rises when she wants to change to a nursing position lying at the other side.

The means for movement control furthermore has the advantage that is will contribute to the absence of free floor space where the sow can throw herself down with the risk of killing sucking pigs by the lying action. To the contrary, the means for movement control provides for the sow attempting to put herself up against the first and delimited long side of the nursing bed.

The means for movement control may be pushed in over a nursing bed by the other activity of the sow in the nursing area.

Before the sow lies down in the nursing bed in question, she will provide for the required space in the nursing bed by removing the means for movement control from the nursing bed. Typically, the sow will use the snout or the head for pushing away the means for movement control. The natural behaviour of the sow is thereby stimulated in which the snout and the head are used for removing obstacles in the nature, such as branches that are in the way of foraging or nesting.

Using the described means for movement control furthermore provides the advantage that two nursing beds may use a part of the same floor area in the pen. When one nursing bed is in use, the means for movement control is disposed in the second nursing bed. When the sow needs change in lying position, she will rise up qua the presence of the means for movement control opposite her belly and before occupying the other nursing bed push the means for movement control aside.

By using the same floor area for two or more nursing beds, optimisation of the necessary area for this part of the pig breeding is achieved while at the same time encouraging the sow to movement and natural behaviour.

In a preferred embodiment, the position of the stop for the displaceable means for movement control may be adjustable. A possibility of adjusting the stop against which the means for movement control is moved provides that the same pen size can be adapted to large sows as well as small sows, such as gilts. When planning the stable construction, no allowance is to be made for the variation in size of the sows, but the stop may be adjusted according to need such that the pen can operate optimally with appropriate movement control for large sows with several farrowings behind them and for the lesser gilts farrowing for the first time as well.

In a variant of the invention, the means for movement control may be adapted for pendulum movement in any direction, e.g. by being suspended in a ball joint.

Hereby is achieved that the means for movement control can be made up of substantially thinner components as the means for movement control does not make any resistance to the actions coming from a sow. Around the time of farrowing, the sow is frequently disturbed and irritable, which may be hard on the equipment which thus has to be dimensioned to absorb these actions without substantial wear and deformation.

The pendulum movement may be provided in many ways, and the said suspending of the means for movement control in a ball joint will be an option. This may e.g. be effected by welding a ball at the end of a pipe, where the pipe constitutes the said means. The ball may then be disposed in a bearing having a downwards opening which is smaller than the dimension of the ball.

Another option is that the means for movement control consists entirely or partly of a chain. This may e.g. be one or more chains that are suspended from and fastened in a displaceable component by fastening one end of the chain. There may also be one or more chains which are fastened to the displaceable component in two or more chain links.

When using chains it has to be observed that by actuating the chain/chains, the sow may displace the means for movement control formed thereof.
In a further variant, the means for movement control may be arranged for pendulum movement in a direction which is substantially parallel with the second long side of the nursing bed, e.g. by being suspended in a pivot joint which is rotatable about a substantially horizontal axis.

In that way is avoided that, due to the above free pendulum movement, the means for movement control swings in over a nursing bed where a sow has laid herself, constituting a nuisance for sow and sucking pigs.

There is also a variant where free pendulum movement is only limited or slowed down such that no pendulum movement occurs in over the nursing bed where the sow is lying. In that way, in the stop for the displaceable means for movement control there may be incorporated a component which only limits pendulum movement in over the nursing bed when the means is pushed to a position close to the stop.

By an embodiment of the invention it is preferred that at least one of the devices for movement control at the nursing bed is spaced apart from the base of the nursing bed, allowing passage of a sucking pig under the device, for example the support device or the means for movement control.

Since the task in connection with optimising the pig breeding is to make the largest possible number of sucking pigs survive and attain slaughter weight under optimal animal welfare conditions, it is of great significance that a good setting with regard to animal welfare does not result in a larger number of sucking pigs being killed by laying. By providing that the sucking pigs can escape under the movement control device or devices present in the pen, the number of surviving sucking pigs will be increased considerably.

In a particularly preferred embodiment of the invention, the support device is arranged at the delimited first long side of the nursing bed at a level above the base in the nursing bed such that passage of a sow across the support device is allowed, e.g. in that the support device is a curving pipe.

By enabling the sow to pass across the support device, the sow is provided a large degree of freedom of movement and thereby exercise which contributes to better health, less stress and thereby longer life and fewer diseases for the sow.

Furthermore, it will provide a greater challenge in movement for the sow that she has to walk across an obstacle instead of there being just one plane floor in the pen. The challenges which the sow has to negotiate in nature are thereby imitated, giving incitement to continued breeding with the sows that function well with movement challenges. This means that the motoric problems caused by the use of conventional stable systems with fixing of the sows will gradually be obviated.

The possibility of the sow passing across the support device may be combined with a possibility of the sucking pigs passing under the support device, for example by using a curving pipe as delimitation of the first long side of the nursing bed. Hereby is achieved a construction which is attractive to the sow such that it chooses this as her nursing bed, and also there is achieved a simple and cleaning-friendly support device enabling good overview and reduced work with possible cleaning in the pen for the farmer or the personnel taking care of the pigs.

In is necessary with a good overview of the pen in order to ensure that all symptoms of disease in the pigs are discovered early, increasing the possibility of success of eventual treatment such that the pig will thrive again.

In a particular variant of the invention, at least one of the devices for movement control may be arranged with varying distance to the base in the nursing bed. By designing the support device at the delimited first long side with varying spacing is achieved that the same simple construction as the above described use of a curving pipe will become even more attractive to the sow. This occurs as the support device can be adapted to support during a greater part of the lying movement action. It may e.g. be envisaged that the above described curving pipe is provided with a greater height above the base around the centre of the nursing bed in its longitudinal direction. Typically, the sow starts the laying movement by "throwing" or "tipping" the hind part of the body against the support device. If the support device has proper height at the middle, this will correspond to the height of the sow's flanks in the intermediate stage of the laying movement, why the sow will lean against the support device before lowering the front part of the body against the base.

Ample support of the sow's laying movement will provide for a slower movement of the sow towards the base which, all things being equal, will mean that more sucking pigs will escape and avoid being killed by laying.

The nursing area may be designed as a nest with a minimum of two nursing beds. The behaviour of the sow around farrowing and nursing is, as mentioned previously, to build a nest in a undisturbed location. When a nest shape has been prepared as nursing area in the pen, the nest will instinctively be attractive to the sow. Thereby is achieved that the sow naturally seeks the nursing area and uses the facilities, such as the device for movement control, according to purpose.

The nursing area is designed as a nest with two parallel nursing beds, such that the nursing beds partly overlap each other.

By optimising the desired nest shape attractive to the sow, the same advantages as described above are achieved simultaneously with the space being optimised. The costs of stable construction and equipment are thereby reduced, whereby the costs of the pig breeding are kept at a reasonable level. All things considered, this enhances the profitability of the pig breeding to take place in the stables and the pens, thereby encouraging more farmers to shift to this pig breeding equipment, whereby a larger part of the pig breeding will take place on conditions that better allow for the behaviour and thereby welfare of the animals.

In a further embodiment, the nest is constituted by an oval ring which e.g. is made of a pipe.

If an oval ring is used, a strong coherent structure is achieved with a certain hoop effect.
The ring can be designed with e.g. a plate or a profile and possibly be provided with spacers for establishing a distance from the base for providing an escape option for sucking pigs.

The ring structure may furthermore be simplified in that the ring only consists of a pipe which is bent or rolled into oval shape. This provides an optimal design with regard to the sow's movement options and the escape possibilities for the sucking pigs, as well as it being easy for the staff to overview the pen and attend to the animals. Moreover, the simple design provides better possibility of allocating bedding and rooting material without substantially increasing the amount of cleaning work.

Materials most often used for pigpen equipment are galvanised iron and waterproof coated plywood. At the moment, the materials have low purchase value compared with their strength and durability; however, other materials that have these properties at the time being may of course be envisaged applied. These may be glass fibre composite, plastic, aluminium or stainless steel.

The floor in the pens may consist of slatted floor which may be of plastic, concrete or other material, or the floor may be a so-called solid cement floor, possibly sloping towards a drain grating or a slatted floor. The floor may be envisaged entirely or partly designed with a covering which e.g. can protect a sow against pressure sores, or insulate or supply heat to a piglet cave.

The equipment part or parts constituted by the nest and the means for movement control can be adjustable in height. The benefit of this that it provides possibility of the same size pen can be adapted according to need to both large and small sows, as well as allowance can be made for the sucking pigs being newly born or so large that they are ready for weaning.

The equipment part or parts constituted by the nest and the means for movement control may be removable from the nursing area.

For example in that the oval ring can be detachable by spacers or legs each being mounted with a bolt in a nut which is embedded in or in other ways fastened to the floor.

Hereby is achieved that it is possible to use the so-called FTS-system. FTS is an abbreviation of Fødsel Til Slagt (Birth To Slaughter), meaning that the sucking pigs remain in the pen in which they are born. This means that after weaning, the sow is moved away from the pen, and at the same time the nest is removed such that there is free floor space for the piglets during the growth period.

At the present, in most cases pig breeding occurs in a way where the piglets are often moved and mixed with other piglets in larger pens such that the focus is on having as many pigs as possible per square meter. However, this implies a large expense to preventive disease control, and that the piglets are set back in growth due to stress and renewed disease pressure.

A great problem in piglet stables by traditional pig breeding is weaning diarrhoea. This means that piglets contract diarrhoea when moved from the sow to a larger flock in the piglet stable. The sow's nursing and first milk strengthens and stimulates the immune response in the sucking pig and the weaning therefore means a weaker immune response while at the same time the sucking pig is exposed to a considerably higher disease pressure from the piglet flock in a new pen or stable.

Thus a two-week preventive antibiotics treatment per shift is most often used as a fixed routine. With regard to growth, it may be expected that the pigs are set back one week in growth per shift.

The FTS system thus provides a number of advantages. There is a saving in feed consumption as the pigs become ready for slaughter 2 - 3 weeks before time compared with a traditional stable, and most often it is not necessary to use antibiotics since the piglets do not become sick. The FTS system has hitherto been used to a very small extent due to large mortality of the sucking pigs, caused by killing by laying, but by the invention as described here it is now possible to considerably reduce this factor so as to get the same level of mortality in sucking pigs as by the presently known solutions.

At the same time, one has the additional advantage that free-range of the farrowing sows provides better and more continuous farrowing processes as the sow may move around. This means that fewer sucking pigs will be stillborn since it is avoided that the pigs get stuck in the birth canal.

There is better possibility of allocating bedding that allow for nesting and rooting behaviour without it causing much extra work in the FTS system. The bedding may be allocated by farrowing and in the nursing period, after which the bedding is dispersed by the sucking pigs and moved to the liquid manure bowl little by little.

By using the FTS system, it is furthermore avoided that the pens are to be washed as often as in the case of a traditional stable as the pens are only to be washed 2.5 times a year, corresponding to the annual number of times when a new litter of pigs from the pens can be brought to slaughtering.

In a possible variant of the pen, the means for movement control may be secured at an optional position. Thereby is achieved that the device can be used for controlling the movements and lying behaviour of the sow in a large pen with separately disposed nursing beds. A secured means for movement control may here counteract that the sow throws herself in the middle of the floor with a consequent sudden laying movement causing danger of squeezing the sucking pigs.

### Description of the Drawing

The invention will now be explained with reference to the accompanying drawing, wherein:
- Fig. 1: shows a cross-section of a nursing bed with a standing sow;
- Fig. 2: shows a cross-section of a nursing bed with a lying sow;
- Fig. 3: is a plan view showing a lying sow with her back against a curving support device;
- Fig. 4: is a plan of a nest with two nursing beds and a sow;
- Fig. 5a: shows an elevation of a nest with a ring made of piping;
- Fig. 5b: shows an elevation of a nest with two half rings; and
- Fig. 5c: shows an elevation of a nest with varying distance from support device to base.

### Detailed Description of the Invention

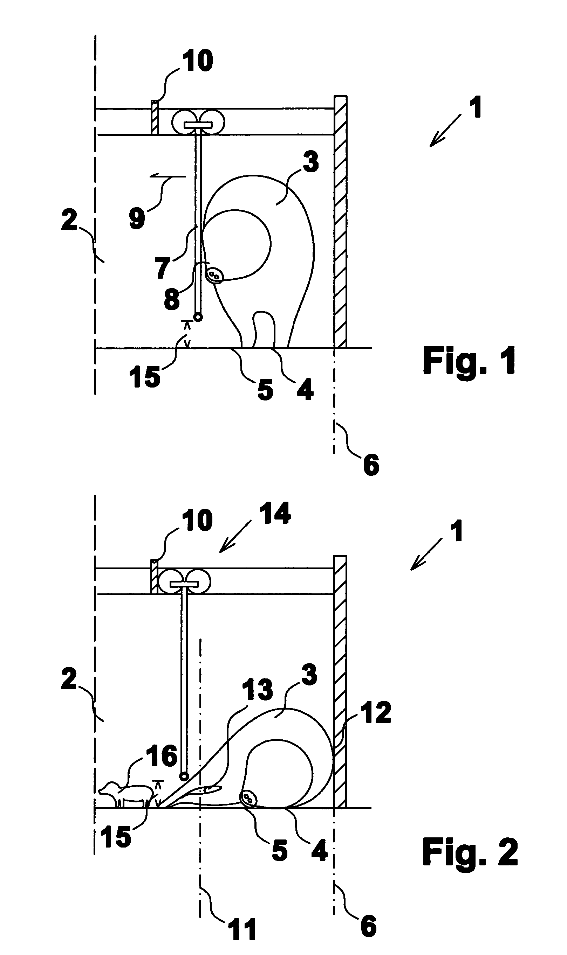

On Fig. 1 is shown a device for movement control 1 provided in a nursing area 2. The nursing sow 3 is about to enter the base 5 of the nursing bed 4. The nursing bed 4 is provided with a delimited first long side 6. The sow 3 is about to move the means for movement control 7 with the snout 8. The means for movement control 7 is moved in direction 9 away from the nursing bed 4 against a stop 10.

Fig. 2 shows the nursing sow 3 lying on the nursing bed 4, and where the sow 3 is positioned with the back 12 against the delimited first long side 6 of the nursing bed 4. The second long side 11 is shown at the sow's 3 belly 13. The means for movement control 7 is displaced against the stop 10 whereby it is disposed in an extreme position 14 immediately outside the second long side 11 of the nursing bed 4.

The means for movement control 7 is disposed at a distance 15 to the base 5 in the nursing bed 4, allowing passage of a sucking pig 16 under the means 7. The distance 15 may e.g. be 15 cm to 20 cm.

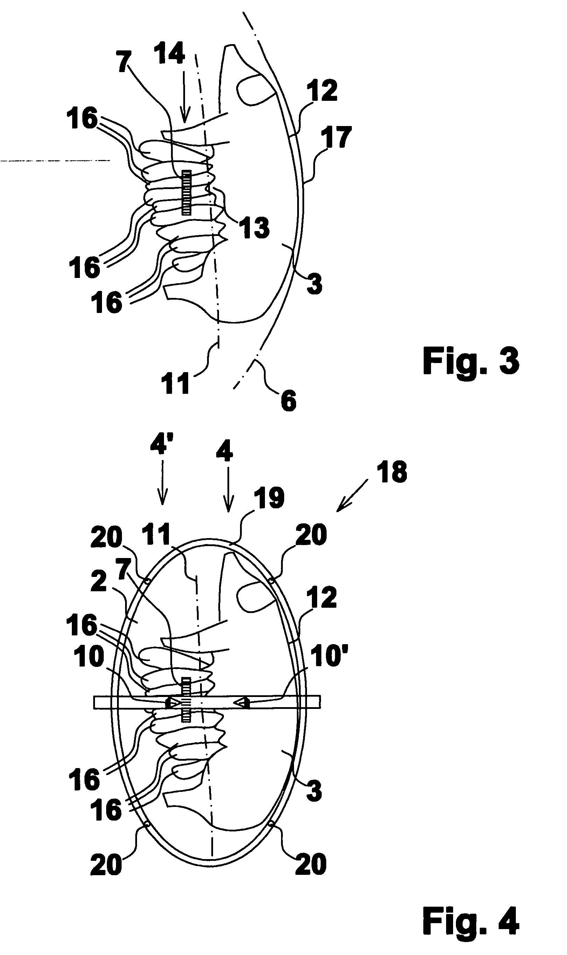

To ensure that the sow 3 in most cases will choose to put her back 12 against the support device 17 at the delimited first long side 6, a design of the support device 17 substantially following the shape of the sow's 3 back 12 in the lying position is shown on Fig. 3. As the sow's 3 back 12 in the lying position most often assumes a curving shape, there is here shown a curving support device 17. The means for movement control 7 is shown disposed in the extreme position 14 immediately outside the second long side 11 of the nursing bed at the belly 13 of the sow 3.

Fig. 4 is a plan view of a nursing area 2 shaped as a nest 18 and consisting of two nursing beds 4, 4'. The nest 18 is formed by a ring 19, here shown as a pipe construction. The ring 19 is fastened to the base 5 at a number of fastening points 20. The nursing sow 3 lies on the one nursing bed 4 after having made space by pushing the means for movement control 7 away from the nursing bed 4 against a stop 10. The means for movement control 7 is thus disposed immediately outside the second long side 11 of the nursing bed 4. Thereby is avoided that the sow 3 will roll onto the belly 13 in order to be positioned in the opposite nursing bed 4'. When the sow 3 needs to change the lying position, it will thus rise from the nursing bed 4. If the sow 3 then wants to use the second nursing bed 4', the sow pushes the means for movement control 7 in direction 9 by means of the snout 8 away from the nursing bed 4' against a stop 10' in order to provide sufficient free space in the nursing bed 4' so that nursing may take place.

The two nursing beds 4 and 4 ' overlap each other, and thus use part of the same floor area in the nursing area 2. The nursing area 2 may thereby be restricted to a minimum, a fact of significance to the minimising of costs of constructing the stable facility.

The positions of the shown stops 10 and 10' may be adjustable such that the extreme position of the means for movement control 7 can be adapted according to the body size of the sow 3. The body size varies from relatively small first-time farrowing sows 3 (gilts) to the large multiple farrowing sows 3.

Moreover, the stops 10 and 10' can be secured at optional positions. This provides for using one or more means for movement control 7 for dividing a larger nursing area 2 where they may function as a guard against a sow throwing herself at the middle of the floor in the nursing area 2, as this behaviour may imply killing sucking pigs by the laying movement.

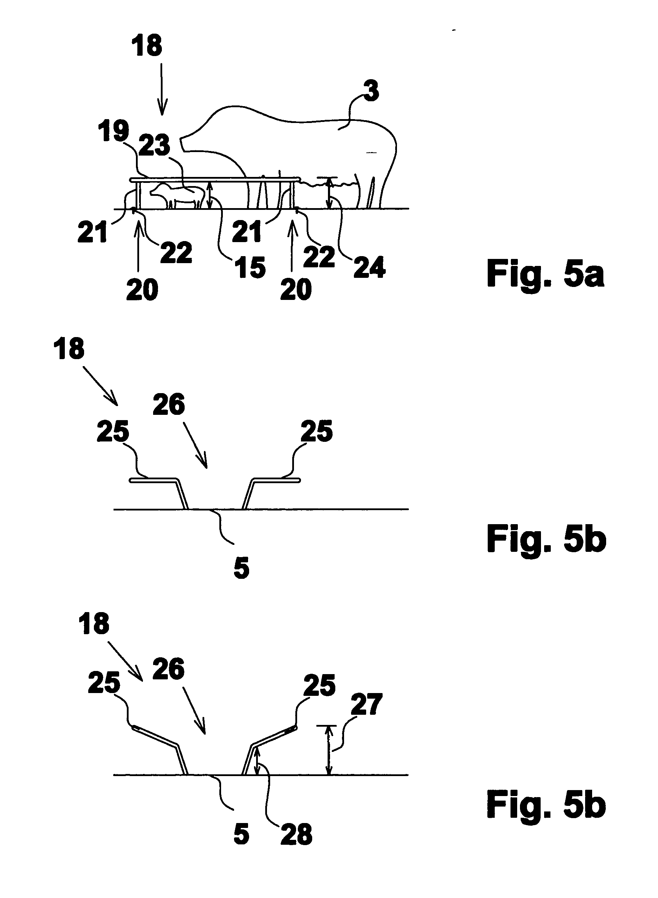

On Fig. 5a is shown a cross-section of a nest 18 formed by a ring 19 made of piping, e.g. one-inch galvanised iron piping. The ring 19 is fastened to the base 5 at a number of fastening points 20. The fastening points 20 consist of a spacer 21 and a fastening 22 at the base. The distance 15 from the ring 19 to the base 5 is sufficient such that a sucking pig 23 can escape under the ring 19. At the same time, the ring 19 is provided at such a height 24 above the base 5 that allows a sow 3 to pass across the ring 19. The ring 19 functions as a curving support device 17 that substantially follows the shape of the sow's 3 back 12 in lying position. The support device 17 slows down the laying movement of the sow, making it possible for the sucking pigs to escape and thereby avoid being killed.

Fig. 5b shows a corresponding cross-section of a nest 18. The nest 18 is here formed by two half rings 25. The design allows for a sow 3 to enter the nest 18 both from the sides where the sow 3 is to pass over a half ring 25, and from the ends 26 of the nest 18 where the sow 3 can enter the nest 18 via the ends 26 without having to pass over a half ring 25.

Similarly, Fig. 5c is a cross-section of a nest 18 where the half ring 25 is provided with varying height 27 above the base 5. The design allows a sow 3 to enter the nest 18 via the ends 26. The minimum distance 28 from the half ring 25 to the base 5 is sufficient for a sucking pig 23 to escape under the ring 25.

The shown variants are not limiting to the scope of the invention but are only examples of how the invention can be practised, as a skilled in the art will be able to apply the invention in many other ways and in several other variants after reading the present description.

## Claims

1. A nursing area (2) for sucking pigs (16) comprising a device (1) for controlling movements of a nursing sow (3), where the nursing area (2) contains at least one elongated nursing bed (4) with a base (5) and having an extension corresponding to the sow (3) in lying position, where the sow (3) may freely leave and enter the nursing bed (4), where the nursing bed (4) is provided with a first delimited long side (6), preferably at the sow's back (12), and a second long side (11), preferably at the sow's belly (13), where at the delimited first long side (6), the nursing bed (4) is provided with a support device (17) which substantially follows the shape of the sow's back (12) in the lying position, preferably a curving support device (17), and that at the second long side (11), the nursing bed (4) is provided with at least one means for movement control (7), **characterised in that** said means for movement control (7) by action of the sow (3) may be displaced away (9) from the nursing bed (4) and which is provided with a stop (10) at a position where the means for movement control (7) in the extreme position (14) is disposed immediately outside the second long side (11) of the nursing bed (4), said nursing area (2) is designed as a nest (18) with two nursing beds (4), where said nursing beds (4) partly overlap each other and are divided by one or more means for movement control (7).

2. A nursing area (2) according to claim 1, **characterised in that** the position of the stop (10) for the displaceable means for movement control (7) is adjustable.

3. A nursing area (2) according to any of claims 1 to 2, **characterised in that** the means for movement control (7) is adapted for pendulum movement in any direction, e.g. by being suspended in a ball joint.

4. A nursing area (2) according to any of claims 1 to 3, **characterised in that** the means for movement control (7) is adapted for pendulum movement in a direction which is substantially in parallel with the second long side (11) of the nursing bed (4), e.g. by being suspended in a pivot joint which is rotatable about a substantially horizontal axis.

5. A nursing area (2) according to any of claims 1 to 4, **characterised in that** at least one of the devices for movement control (7, 17) at the nursing bed (4) is spaced apart from the base (5) in the nursing bed (4), allowing passage of a sucking pig (16) under the device, for example the support device (17) or the means for movement control (7).

6. A nursing area (2) according to any of claims 1 to 5, **characterised in that** at the delimited first long side (6) of the nursing bed (4), the support device (17) is arranged at a level above the base (5) in the nursing bed (4) allowing passage of a sow (3) across the support device (17), wherein the support device (17, 19) e.g. is a curving pipe.

7. A nursing area (2) according to any of claims 5 to 6, **characterised in that** at least one of the devices for movement control (7, 17) is arranged with varying distance (27) to the base (5) in the nursing bed (4).

8. A nursing area (2) according to any of claims 1 to 7, **characterised in that** a nursing bed (4) comprises an oval ring (19) which e.g. is made of a pipe.

## Patentansprüche

1. Säugebereich (2) für Saugferkel (16) und umfassend eine Vorrichtung (1) zur Kontrolle der Bewegungen eines Mutterschweins (3), wobei der Säugebereich (2) wenigstens ein längliches Säugebett (4) mit einer Plattform (5) und einer dem liegenden Mutterschwein (3) entsprechenden Erstreckung aufweist, wobei das Mutterschwein (3) das Säugebett (4) frei verlassen und wieder betreten kann, wobei das Säugebett (4) eine erste begrenzte Längsseite (6), vorzugsweise am Rücken (12) des Mutterschweins, sowie eine zweite Längsseite (11), vorzugsweise am Bauch (13) des Mutterschweins, aufweist, wobei das Säugebett (4) an der begrenzten ersten Längsseite (6) eine vorzugsweise gekrümmte Stützvorrichtung (17) aufweist, die im wesentlichen der Form des Rückens (12) des liegenden Mutterschweins folgt, und daß das Säugebett (4) an der zweiten Längsseite (11) mit wenigstens einem Bewegungskontrollmittel (7) versehen ist, **dadurch gekennzeichnet, daß** das Bewegungskontrollmittel (7) durch das Bewegen des Mutterschweins (3) vom Säugebett hinweg verschoben wird (9), und in einer Position, in der das Bewegungskontrollmittel (7) in der Endlage (14) unmittelbar außerhalb der zweiten Längsseite (11) des Säugebetts (4) angeordnet ist, mit einem Anschlag (10) versehen ist, wobei das Säugebett (2) als ein Nest (18) mit zwei Säugebetten (4) gestaltet ist, wobei die Säugebetten (4) einander teilweise überlappen und durch ein oder mehrere Bewegungskontrollmittel (7) aufgeteilt sind.

2. Säugebereich (2) nach Anspruch 1, **dadurch gekennzeichnet, daß** die Lage des für das verschibbare Bewegungskontrollmittel (7) vorgesehenen Anschlags (10) verstellbar ist.

3. Säugebereich (2) nach irgendeinem der Ansprüche 1 bis 2, **dadurch gekennzeichnet, daß** das Bewegungskontrollmittel (7), z.B. durch Aufhängung in einem Kugelgelenk, zur Pendelbewegung in alle Richtungen eingerichtet ist.

4. Säugebereich (2) nach irgendeinem der Ansprüche 1 bis 3, **dadurch gekennzeichnet, daß** das Bewegungskontrollmittel (7) zur Pendelbewegung in einer mit der zweiten Längsseite (11) des Säugebetts (4) im wesentlichen parallelen Richtung eingerichtet ist, z.B. durch Aufhängung in einem um eine im wesentlichen waagerechte Achse rotierbaren Zapfengelenk.

5. Säugebereich (2) nach irgendeinem der Ansprüche 1 bis 4, **dadurch gekennzeichnet, daß** wenigstens eines der Bewegungskontrollmittel (7, 17) am Säugebett (4) von der Plattform (5) des Säugebettes (4) beabstandet ist und ermöglicht somit den Durchgang eines Saugferkels (16) unterhalb der Vorrichtung, z.B. der Stützvorrichtung (17) oder dem Bewegungskontrollmittel (7).

6. Säugebereich (2) nach irgendeinem der Ansprüche 1 bis 5, **dadurch gekennzeichnet, daß** die Stützvorrichtung (17) an der begrenzten ersten Längsseite (6) des Säugebettes (4) in einer Höhenlage oberhalb der Plattform (6) im Säugebett (4) angeordnet ist und ermöglicht somit den Übergang eines Mutterschweins (3) quer über die Stützvorrichtung (17), wobei die Stützvorrichtung (17, 19) z.B. ein gekrümmtes Rohr ist.

7. Säugebereich (2) nach irgendeinem der Ansprüche 5 bis 6, **dadurch gekennzeichnet, daß** wenigstens eines der Bewegungskontrollmittel (7, 17) mit wechselndem Abstand (27) zur Plattform (5) des Säugebetts (4) angeordnet ist.

8. Säugebereich (2) nach irgendeinem der Ansprüche 1 bis 7, **dadurch gekennzeichnet, daß** das Säugebett (4) einen ovalen, z.B. aus Rohrmaterial hergestellten Ring (19) aufweist.

## Revendications

1. Zone d'allaitement (2) pour des truies allaitantes (16) comprenant un dispositif (1) de régulation des mouvements d'une truie allaitante (3), la zone d'allaitement (2) comportant au moins une couche d'allaitement oblongue (4) avec une base (5) et présentant une extension correspondant à la truie (1) dans une position couchée, où la truie (3) peut quitter et entrer librement la couche d'allaitement (4), où ladite couche d'allaitement (4) est munie d'un premier côté long délimité (6), de préférence près du dos de la truie (12), et d'un deuxième côté long (11), de préférence près du ventre de la truie (13), où la couche d'allaitement (4) sur le premier côté long délimité (6) est muni d'un dispositif de support (17) qui substantiellement suit le contour du dos de la truie (12) dans la position couchée, de préférence un dispositif de support courbé (17), et que la couche d'allaitement (4) sur le deuxième côté long (11) est munie d'au moins un organe de régulation de mouvement (7), **caractérisée en ce que** ledit organe de régulation de mouvement (7) par actionnement de la truie (3) peut être déplacé loin de (9) la couche d'allaitante (4) et qui est muni d'une butée (10) à une position dans laquelle l'organe de régulation de mouvement (7) dans la position extrème (14) est disposé immédiatement en dehors du deuxième côté long (11) de la couche allaitante (4), ladite couche allaitante (2) est crée comme un nid (18) avec deux couches allaitantes (4), lesdites couches allaitantes (4) se recouvrant partiellement et étant divisées par un ou plusieurs organes de régulation de mouvement (7).

2. Zone allaitante (2) selon la revendication 1, **caractérisée en ce** la position de la butée (10) pour l'organe de régulation de mouvement (7) déplacable est réglable.

3. Zone allaitante (2) selon l'une quelconque des revendications 1 à 2, **caractérisée en ce** l'organe de régulation de mouvement (7) est adapté pour mouvement pendulaire dans n'importe quelle direction, par exemple en étant suspendu dans un joint à rotule.

4. Zone allaitante (2) selon l'une quelconque des revendications 1 à 3, **caractérisée en ce que** l'organe de régulation de mouvement (7) est adapté pour mouvement pendulaire dans une direction qui est essentiellement parallèle au deuxième côté long (11) de la couche allaitante (4) par exemple en étant suspendu dans un tourillon d'articulation qui est pivotable autour d'un axe substantiellement horizontal.

5. Zone allaitante (2) selon l'une quelconque des revendications 1 à 4, **caractérisée en ce qu'**au moins un des dispositifs de régulation de mouvement (7, 17) de la couche allaitante (4) est écarté de la base (5) de la couche allaitante (4), permettant le passage d'un cochon de lait (16) sous le dispositif, par exemple le dispositif de support (17) ou l'organe de régulation de mouvement (7).

6. Zone allaitante (2) selon l'une quelconque des revendications 1 à 5, **caractérisée en ce que** sur le premier côté long délimité (6) de la couche allaitante (4), le dispositif de support (17) est arrangé à un niveau au dessus de la base (5) de la couche allaitante (4) permettant le passage d'une truie (3) à travers le dispositif de support (17), le dispositif de support (17, 19) constituant par exemple un tuyau courbé.

7. Zone allaitante (2) selon l'une quelconque des revendications 5 à 6, **caractérisée en ce qu'**au moins un des dispositifs de régulation de mouvement (7, 17) est arrangé à distance variable à la base (5) de la couche allaitante (4).

8. Zone allaitante (2) selon l'une quelconque des revendications 1 à 7, **caractérisée en ce qu'**une couche allaitante (4) comprend un anneau oval (19) qui par exemple est fait d'un tuyau.
